# EUROPÄISCHE PATENTSCHRIFT

(11) **EP 0 633 906 B1**
(45) Veröffentlichungstag und Bekanntmachung des Hinweises auf die Patenterteilung: **25.09.1996**
(21) Anmeldenummer: 93906588.4
(22) Anmeldetag: 23.03.1993
(51) Int. Cl.: C08G 81/02, G03G 9/087

(54) **POLYESTER AUF BASIS VON HYDROXYLGRUPPENHALTIGEN PRÄPOLYMEREN UND IHRE VERWENDUNG ALS BINDEMITTEL**
POLYESTERS ON THE BASIS OF HYDROXYL GOUPS-CONTAINING PREPOLYMERS AND THEIR USE AS BINDERS
POLYESTERS A BASE DE PREPOLYMERES CONTENANT DES GROUPES HYDROXYLE ET LEUR UTILISATION EN TANT QUE LIANTS

(30) Priorität: 03.04.1992 DE 4211062
(43) Veröffentlichungstag der Anmeldung: 18.01.1995
(73) Patentinhaber: BASF Aktiengesellschaft, 67063 Ludwigshafen (DE)
(72) Erfinder: MEICHSNER, Georg, D-6700 Ludwigshafen (DE); WUENSCH, Thomas, D-6702 Dad Duerkheim (DE); DYLLICK-BRENZINGER, Rainer, D-6940 Weinheim (DE)
(86) Internationale Anmeldenummer: EP9300696
(87) Internationale Veröffentlichungsnummer: WO9320129

(56) Entgegenhaltungen:
- PATENT ABSTRACTS OF JAPAN vol. 12, no. 180 (P-709)(3027) 27. Mai 1988 & JP-A-62 289 851
- PATENT ABSTRACTS OF JAPAN vol. 14, no. 430 (P-1106)(4373) 14. September 1990 & JP-A-21 67 563

## Beschreibung

### Beschreibung

Die vorliegende Erfindung betrifft neue Polyesterharze auf Basis von hydroxylgruppenhaltigen Präpolymeren aus olefinisch ungesättigten Monomeren und ihre Verwendung als Bindemittel für elektrophographische Toner. Weiterhin betrifft die Erfindung diese Polyesterharze als Bindemittel enthaltende elektrophotographische Toner.

An elektrophotographische Toner werden eine Vielzahl von Anforderungen gestellt, die sich aus dem Kopierprozess, der Tonerherstellung oder aus der Handhabung der Toner ergeben. Viele der Anforderungen an einen Toner werden durch das Bindemittel, d.h. durch das Tonerharz bestimmt.

So muß ein Tonerharz z. B. befähigt sein, Additive wie Ruß, Ferrite, Magnetit, Aerosil, Ladungsstabilisatoren und Wachse gut zu dispergieren. Eine einheitliche Dispergierung ist notwendig, da sonst Tonerteilchen mit stark unterschiedlichen elektrostatischen Eigenschaften vorliegen können.

Eine andere Anforderung ist eine gute Mahlbarkeit des Tonerharzes. Bei der Tonerfertigung werden meist Gegenstrahlmuhlen verwandt. Manche Harze liefern Toner, die sehr lange Zeiten benötigen, bis sie in einer Gegenstrahlmühle auf die gewünschten Partikelgröße, vorzugsweise 5 bis 15 µm, gebracht werden können. Ein anderes Problem bei der Mahlung auf der Gegenstrahlmühle ist oft das Anfallen von Feinstaub, d.h. von Teilchen, die eine Partikelgröße haben, die unter 5 µm liegt.

Die Lagerstabilität eines Toners wird ebenfalls vom Tonerharz beeinflußt. Ein Harz, das bei Raumtemperatur oder den im Kopiergerät vorherrschenden Temperaturen weich wird und verkleben kann, liefert Tonerpulver, die verbacken können und nicht mehr fließfähig sind. Verbackung des Tonerpulvers kann auch auftreten, wenn ein feuchtigkeitsempfindliches, auch nur schwach hygroskopisches Harz eingesetzt wird. Zudem führen Harze, die Feuchtigkeit aus der Umgebungsluft aufnehmen, zu Tonern, deren elektrostatische Eigenschaften stark von der Luftfeuchtigkeit abhängen. Das Auftreten von Hintergrund und unregelmäßiger Schwarze bei Vollflächen auf der Kopie sind die Folge.

Ein weiteres Problem ist die Erhöhung der Fixiergeschwindigkeit eines auf den Bedruckstoff (Nehmer) übertragenen Bildes durch Wärme, d.h. die Erhöhung der Taktzeit des Kopiergerätes. Die Eigenschaften eines Toners bei der Fixierung werden stark durch das Schmelzverhalten des Tonerharzes beeinflußt. Eine höhere Fixiergeschwindigkeit erreicht man, indem man ein Harz mit einem niedrigen Erweichungspunkt verwendet. Dabei kann jedoch das Problem des "hot offset" auftreten, d.h. ein Teil des geschmolzenen Toners bleibt an der heißen Fixierwalze des Kopiergerätes hängen und wird auf nachfolgende Kopien übertragen.

In der US-A 4 657 837 (1) wird das Problem des "hot offset" durch Verwendung eines verzweigten Polyesters aus Terephthalsäure, Trimellithsäure und ethoxyliertem bzw. propoxyliertem Bisphenol-A gelöst. Toner aus diesem Harz zeigen sehr gute anti-offset-Eigenschaften, sind jedoch, wegen ihres hohen Erweichungspunktes, nicht geeignet für Kopierer mit Taktzeiten von mehr als 50 Kopien pro Minute, da keine ausreichende Fixierung auf dem Bedruckstoff (Nehmer) erhalten wird.

Polyester mit niedrigerem Erweichungspunkt dafür aber schlechteren anti-offset-Eigenschaften sind in der US-A 4 980 448 (2) beschrieben. Diese Polyester sind erhältlich durch Umsetzung einer Dicarbonsäure-Komponente, einer Diol-Komponente und eines Vernetzers. Jedoch besteht bei der Herstellung dieser Harze die Gefahr, daß eine zu starke Vernetzung bei der Polykondensation eintritt.

Aus der EP-195 604 (3) sind Polyester zur Verwendung in Tonermischungen bekannt, die durch Copolykondensation einer Diolkomponente aus ethoxyliertem bzw. propoxyliertem Bisphenol-A mit einem Copolymer aus Styrol oder einem Styrolderivat und einem carboxylgruppenhaltigen Vinylmonomer erhältiich sind. Auch diese Polyester lösen nicht die geschilderten Probleme des Standes der Technik.

Tonerharze, die eine sehr hohe Viskosität nach dem Aufschmelzen haben oder nur sehr langsam aufschmelzen, zeigen das Phänomen des "cold offset", d.h. Tonerpartikel werden nicht richtig auf dem Papier fixiert und können deshalb auf den Fixierwalzen hängen bleiben. In der Literatur wird häufig die Verwendung von Harzen mit bimodaler Molekulargewichtsverteilung beschrieben, die cold und hot offset vermeiden. Dies ist auch durch die Verwendung von Harzmischungen oder Harzen mit einer breiten Molekulargewichtsverteilung zu erzielen. So sorgt der niedermolekulare Anteil für ein gutes Aufschmelzen des Bindemittels und eine gute Fixierung auf dem Papier, der höhermolekulare Anteil sorgt für die genügend hohe Viskosität des Bindemittels und verleiht dem aufgeschmolzenen Toner eine gewisse Kohäsion, die ein hot offset verhindert.

Die elektrostatische Aufladbarkeit von Tonerharzen ist ebenfalls von Bedeutung. Die Aufladung ist durch Ladungsstabilisatoren steuerbar. Ein wichtiges Kriterium ist auch die Stabilität der Ladung. Viele Toner haben die Tendenz, während des Entwicklungsvorganges zuviel Ladung aufzubauen. Der Ladungsstabilisator reguliert die Ladung auf einem ganz bestimmten Niveau, dadurch erhält man eine sehr gleichmäßige Kopienschwärze. In diesem Zusammenhang ist die Wechselwirkung zwischen Ladungsstabilisator und Tonerharz eine kritische Größe.

Aufgabe der vorliegenden Erfindung war es demnach, den geschilderten Mängeln des Standes der Technik abzuhelfen. Es sollte somit ein Tonerharz bereitgestellt werden, welches insbesondere leicht und problemlos herstellbar ist, gute Dispergiereigenschaften aufweist, gut mahlbar und gut lagerstabil ist sowie gute cold und hot offset-Eigenschaften bei gleichzeitig hoher Fixiergeschwindigkeit zeigt.

Demgemäß wurden Polyesterharze auf Basis von hydroxylgruppenhaltigen Präpolymeren aus olefinisch ungesättigten Monomeren gefunden, welche erhältlich sind durch
(1) Polymerisation eines Gemisches aus
   (a) 60 bis 90 Gew.-% Styrol oder eines Styrol-Derivates der allgemeinen Formel I 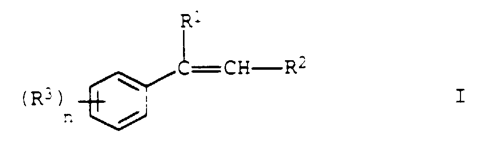 in der R¹, R² und R³ für Wasserstoff, Methyl oder Ethyl stehen und n 1 oder 2 bedeutet, oder eines C₂- bis C₁₀-Olefins mit einer oder zwei konjugierten Doppelbindungen oder einer Mischung hieraus,
   (b) 0 bis 40 Gew.-% eines C₁- bis C₁₂-Alkylesters der Acryl- oder Methacrylsäure, Acryl- oder Methacrylnitril, Acryl- oder Methacrylamid, welches am Amidstickstoff durch ein oder zwei C₁- bis C₄-Alkylgruppen substituiert sein kann, Maleinsäureanhydrid oder Maleinsäureimid, welches am Imidstickstoff durch eine C₁- bis C₄-Alkylgruppe substituiert sein kann, oder einer Mischung hieraus,
   (c) 0 bis 20 Gew.-% eines oder mehrerer hydroxylgruppenhaltiger Acryl- oder Methacrylsäure-Derivate und
   (d) 0 bis 2 Gew.-% eines oder mehrerer mehrfach olefinisch ungesättigter Monomeren,
   zum Präpolymeren A, wobei beim Fehlen der Monomerkomponente (c) die Hydroxylgruppen in A durch Verwendung von hydroxylgruppenhaltigen Reglern eingebaut werden, und anschließend
(2) Polykondensation eines Gemisches aus
   A) 5 bis 95 Gew.-% des Präpolymeren A,
   B) 0 bis 95 Gew.-% eines weiteren niedermolekularen oder höhermolekularen Polyols, eines Polyesters oder eines Polyamids oder einer Mischung hieraus und
   C) 5 bis 70 Gew.-% einer oder mehrerer aliphatischer oder aromatischer Dicarbonsäuren C oder deren C₁-bis C₄-Alkylester, wobei A und B zusammen 30 bis 95 Gew% dieses Gemischs ausmachen und
   wobei auch Carbonsäuren oder deren C₁- bis C₄-Alkylester mit mehr als zwei Carboxylgruppen im Molekül oder Monocarbonsäuren oder deren C₁- bis C₄-Alkylester oder Hydroxymonocarbonsäuren oder deren C₁- bis C₄-Alkylester oder Mischungen hieraus sowie Wachse bei der Polykondensation mit anwesend sein können.

Bei den als Monomere (a) für die Polymerisation (1) dienenden Styrol und Styrol-Derivaten I steht der Rest R¹ vorzugsweise für Wasserstoff oder Methyl, die Reste R² und R³ bezeichnen vorzugsweise Wasserstoff und n bedeutet vorzugsweise 1. Steht R³ im Fall n = 1 für Methyl oder Ethyl, liegt eine ortho-, meta- oder vorzugsweise para-Substitution am Phenylkern vor. Steht R³ im Fall n = 2 für Methyl oder Ethyl, ist das Substitutionsmuster am Phenylkern vorzugsweise 2,4.

Als Monomere (a) für die Polymerisation (1) eignen sich weiterhin geradkettige oder verzweigte C₂- bis C₁₀-Olefine wie Ethylen, Propylen, 1-Butylen, 2-Butylen, Butadien, Isopren, 1-Penten, 2-Penten, 3-Penten, 1-Hexen, 2-Hexen, 3-Hexen, 2,4-Hexadien, Heptene, Octene, Nonene und Decene.

Bevorzugt werden als Monomere (a) für die Polymerisation (1) Styrol, α-Methylstyrol, Ethylen, Propylen, Butadien oder eine Mischung hieraus.

Die als Monomere (b) für die Polymerisation (1) in Betracht kommenden Acrylsäure- und Methacrylsäure-C₁-bis C₁₂-alkylester tragen als geradkettigen oder verzweigten Alkoholrest beispielsweise eine Methyl-, Ethyl, n-Propyl-, iso-Propyl-, n-Butyl-, iso-Butyl-, sec.-Butyl-, tert.-Butyl-, n-Amyl-, iso-Amyl-, sec.-Amyl-, tert.-Amyl-, Neopentyl-, n-Hexyl, n-Heptyl-, n-Octyl-, 2-Ethylhexyl-, n-Nonyl-, iso-Nonyl-, n-Decyl-, n-Undecyl- oder n-Dodecyl-Gruppe. Bevorzugt hiervon werden Acrylsäure- und Methacrylsäure-C₁- bis C₄-alkylester. Als C₁- bis C₄-Alkylgruppen, welche als Substituenten am Amidstickstoff von Acryl- oder Methacrylamid bzw. am Imidstickstoff von Maleinsäureimid auftreten können, kommen die oben genannten Gruppen in Betracht.

Bevorzugt werden als Monomere (b) für die Polymerisation (1) C₁- bis C₄-Alkylester der Acryl- oder Methacrylsäure, Acryl- oder Methacrylnitril, Acryl- oder Methacrylamid oder eine Mischung hieraus. Insbesondere die Methacrylsäurederivate zeigen überragende Ergebnisse.

Als hydroxylgruppenhaltige Acryl- oder Methacrylsäure-Derivate (c) für die Polymerisation (1) eignen sich vor allem Hydroxy-C₂- bis C₄-alkylacrylate oder -methacrylate, z.B. 2-Hydroxyethylacrylat, 2-Hydroxyethylmethacrylat, 2-oder 3-Hydroxypropylacrylat, 2- oder 3-Hydroxypropylmethacrylat, 4-Hydroxybutylacrylat oder 4-Hydroxybutylmethacrylat, N-(Hydroxy-C₂- bis C₄-alkyl)acrylamide oder -methacrylamide, z.B. N-(2-Hydroxyethyl)acrylamid, N-(2-Hydroxyethyl)methacrylamid, N-(4-Hydroxybutyl)acrylamid oder N-(4-Hydroxybutyl)methacrylamid, oder Mischungen hieraus. Daneben kommen aber auch N-(Hydroxy-C₂- bis C₄-alkyl)maleinsäureimide, z.B. N-(2-Hydroxyethyl)maleinsäureimid, hydroxylgruppenhaltige Styrol-Derivate, z.B. ortho-, meta- oder para-Hydroxystyrol oder ortho-, meta- oder para-(Hydroxymethyl)styrol, oder Alkenole, z.B. But-3-en-1-ol oder Prop-2-en-1-ol (Allylalkohol), in Betracht.

Als mehrfach olefinisch ungesättigte Monomere (d) kommen insbesondere solche mit 2 bis 5 Vinyl- oder Allylgruppen im Molekül in Betracht, beispielsweise Glykoldi(meth)acrylat, Butandioldi(meth)acrylat, Glycerintri(meth)acrylat, (Meth)Allyl(meth)acrylat, Pentaerythrittriallylether, Pentaallylsucrose, Di(meth)acrylate von Polyethylenglykolen eines Molekulargewichtes bis zu 3000, Divinyldioxan oder vor allem Divinylbenzol. Durch diese als Vernetzer fungierenden Monomere können gewünschtenfalls die Eigenschaften der Präpolymeren A in gewissen Grenzen modifiziert werden.

Beim Fehlen der Monomerkomponente (c) wird ein hydroxylgruppenhaltiger Regler bei der Polymerisation (L) eingesetzt, um in das Präpolymer A die notwendigen Hydroxylgruppen einzubauen. Diese Regler werden in den üblichen Mengen zugesetzt, also etwa 0,1 bis 5 Gew.-%, insbesondere 0,3 bis 2 Gew.-%, bezogen auf die Gesamtmenge der Monomeren (a) und (b).

Als hydroxylgruppenhaltige Regler eignen sich vor allem hydroxylgruppenhaltige Mercaptane, z.B. 2-Hydroxyethylmercaptan (2-Mercaptoethanol), 1-Mercapto-2,3-propandiol, 3-Mercaptopropanol, 4-Mercaptobutanol, Mercaptoessigsäure-2-hydroxyethylester oder 3-Mercaptopropionsäure-2-hydroxyethylester. Die besten Ergebnisse erzielt man mit 2-Mercaptoethanol.

In einer bevorzugten Ausführungsform setzt man bei der Polymerisation (1) ein Gemisch aus 65 bis 85 Gew.-% der Monomeren (a), 0 bis 35 Gew.-% der Monomeren (b), 0 bis 15 Gew.-% der Monomeren (c) und 0 bis 0,5 Gew.-% der Monomeren (d) ein.

Das Präpolymer A kann durch Suspensions-, Lösungs- oder Blockpolymerisation nach den hierfür üblichen Methoden hergestellt werden. Bei der anschließenden Polykondensation (2) setzt man jedoch vorzugsweise durch Lösungspolymerisation hergestellte Präpolymere A ein, da dann die Polymerisation (1) und die Polykondensation (2) in einem Reaktionsgefäß nacheinander durchgeführt werden können, weil eine Isolierung des Präpolymeren entfällt.

Bei einer Suspensionspolymerisation verwendet man als Suspendiermittel zweckmäßigerweise Mischungen aus Wasser und mit Wasser mischbaren organischen Lösungsmittel, z.B. Wasser-Ethanol-Mischungen oder Wasser-Isopropanol-Mischungen mit niedrigem Alkoholanteil, oder insbesondere Wasser allein. Als Schutzkolloid setzt man beispielsweise Polyvinylpyrrolidon ein.

Bei der Lösungspolymerisation verwendet man als Lösungsmittel zweckmäßigerweise inerte organische Lösungsmittel, insbesondere aliphatische oder aromatische Kohlenwasserstoffe, z.B. Toluol, Xylol, Cyclohexan, Methylcyclohexan, Petrolether oder Ligroin. Geeignet sind aber auch Halogenkohlenwasserstoffe z.B. Chloroform.

Die Polymerisation (1) wird zweckmäßigerweise radikalisch initiiert durchgeführt, als Radikalinitiatoren eignen sich beispielsweise Benzoylperoxid oder tert.-Butylperoctanoat. Als Polymerisationstemeperatur kommt der Bereich von 60 bis 130°C, insbesondere von 80 bis 120°C in Betracht. Bei Lösungspolymerisation ist eine Fahrweise unter Siedekühlung zweckmäßig.

Das mittlere Molekulargewicht Mₙ des Präpolymeren A sollte im Bereich von 800 bis 40 000, insbesondere von 800 bis 15 000 liegen. Die OH-Zahl von A sollte kleiner als 60, insbesondere kleiner als 50 mg KOH/g sein. Bevorzugt werden Lösungspolymerisate A mit OH-Zahlen von 1 bis 16 mg KOH/g bei einem Verhältnis der Komponenten A zu B von größer als 40 : 60 bei der Polykondensation (2). Ist das Verhältnis A zu B bei der Polykondensation (2) kleiner als 40 : 60, kann man auch vorteilhaft Präpolymere A mit OH-Zahlen größer als 10 mg KOH/g verwenden.

Als Komponenten B für die Polykondensation (2) eignen sich vor allem C₂- bis C₆-Alkandiole, z.B. Ethylenglykol, 1,2-und 1,3-Propandiol, 1,4-Butandiol, 1,6-Hexandiol, Neopentylglykol, ethoxyliertes oder propoxyliertes Bisphenol-A, z.B. mit 2 bis 20 mol Ethylenoxid oder Propylenoxid umgesetztes Bisphenol-A, oder Mischungen hieraus. Daneben können aber auch höhermolekulare Polyole mit einem mittleren Molekulargewicht Mₙ von mehr als 500, z.B. Polyesterdiole, Polyetherdiole oder Polycarbonatdiole, Polyester wie Polycaprolacton oder Polyamide wie Polycaprolactam verwendet werden.

Als Dicarbonsäuren C für die Polykondensation (2) kommen insbesondere Phthalsäure, Isophthalsäure, Terephthalsäure oder deren C₁- bis C₄-Monoalkylester und insbesondere C₁-bis C₄-Dialkylester oder eine Mischung hieraus in Betracht. Daneben können aber auch beispielsweise Cyclohexandicarbonsäuren oder aliphatische Dicarbonsäuren wie Bernsteinsäure oder Adipinsaure oder die entsprechenden C₁- bis C₄-Monoalkylester und insbesondere C₁- bis C₄-Dialkylester eingesetzt werden.

Man setzt bei der Polykondensation (2) ein Gemisch aus 5 bis 95 Gew.-% des Präpolymeren A, 0 bis 95 Gew.-% der Komponente B und 5 bis 70 Gew.-% der Dicarbonsäure C oder deren Ester ein, wobei A und B zusammen 30 bis 95 Gew.-% dieses Gemisches ausmachen. In einer bevorzugten Ausführungsform setzt man ein Gemisch aus 30 bis 70 Gew.-% A, 10 bis 50 Gew.-% B und 10 bis 50 Gew.-% C ein, wobei A und B zusammen 50 bis 90 Gew.-% dieses Gemisches ausmachen.

Bei der Polykondensation (2) können als zusätzliche Carbonsäuren beispielsweise Trimellithsäure, Benzoesäure, o- oder p-Hydroxybenzoesäure, Nicotinsäure oder Stearinsäure bzw. die entsprechenden C₁- bis C₄-Alkylester sowie Wachse, z.B. Polypropylenwachs, mit anwesend sein. Diese zusätzlichen Carbonsäuren bzw. deren Ester liegen dann in Mengen bis zu 15 Gew.-%, die Wachse in Mengen bis zu 15 Gew.-%, jeweils bezogen auf die Gesamtmenge des Gemisches aus A, B und C, vor.

Als C₁- bis C₄-Alkanole in den eingesetzten Carbonsäureestern eignen sich n-Propanol, iso-Propanol, n-Butanol, sec.- Butanol, tert.-Butanol und vor allem Methanol und Ethanol.

Das bei der Polykondensation (2) entstehende Wasser oder das entstehende C₁- bis C₄-Alkanol wird zweckmäßigerweise direkt aus der Harzschmelze abdestilliert, wenn ohne Schleppmittel gearbeitet wird, oder mittels eines Schleppmittels wie Toluol, Xylol, Methylcyclohexan oder Chloroform entfernt. Man führt die Polykondensation üblicherweise in Gegenwart eines Katalysators wie Dibutylzinnoxid, einem Titanalkoholat, p-Toluolsulfonsäure oder Schwefelsäure in den hierfür üblichen Mengen durch.

Man führt die Polykondensation (2) entweder so durch, daß man das Präpolymere A zu den bis zu einer OH-Zahl von kleiner als 90 mg KOH/g vorkondensierten Komponenten B und C zugibt oder so, daß man alle drei Komponenten A, B und C gleichzeitig zusammengibt. Die Vervollständigung der Kondensation wird gegen Ende der Umsetzung bei Temperaturen von 180 bis 280°C vorgenommen.

Gegenstand der vorliegenden Erfindung ist weiterhin ein Verfahren zur Herstellung von Polyesterharzen auf Basis von hydroxylgruppenhaltigen Präpolymeren aus olefinisch ungesättigten Monomeren, welches dadurch gekennzeichnet ist, daß man
(1) eine Polymerisation eines Gemisches aus
   (a) 60 bis 90 Gew.-% Styrol oder eines Styrol-Derivates der allgemeinen Formel I 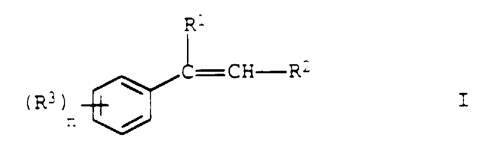 in der R¹, R² und R³ für Wasserstoff, Methyl oder Ethyl stehen und n 1 oder 2 bedeutet, oder eines C₂- bis C₁₀-Olefins mit einer oder zwei konjugierten Doppelbindungen oder einer Mischung hieraus,
   (b) 0 bis 40 Gew.-% eines C₁- bis C₁₂-Alkylesters der Acryl- oder Methacrylsäure, Acryl- oder Methacrylnitril, Acryl- oder Methacrylamid, welches am Amidstickstoff durch ein oder zwei C₁- bis C₄-Alkylgruppen substituiert sein kann, Maleinsäureanhydrid oder Maleinsäureimid, welches am Imidstickstoff durch eine C₁- bis C₄-Alkylgruppe substituiert sein kann, oder einer Mischung hieraus,
   (c) 0 bis 20 Gew.-% eines oder mehrerer hydroxylgruppenhaltiger Acryl- oder Methacrylsäure-Derivate und
   (d) 0 bis 2 Gew.-% eines oder mehrerer mehrfach olefinisch ungesättigter Monomeren,
   zum Präpolymeren A, wobei beim Fehlen der Monomerkomponente (c) die Hydroxylgruppen in A durch Verwendung von hydroxylgruppenhaltigen Reglern eingebaut werden, und anschließend
(2) eine Polykondensation eines Gemisches aus
   A) 5 bis 95 Gew.-% des Präpolymeren A,
   B) 0 bis 95 Gew.-% eines weiteren niedermolekularen oder höhermolekularen Polyols, eines Polyesters oder eines Polyamids oder einer Mischung hieraus und
   C) 5 bis 70 Gew.-% einer oder mehrerer aliphatischer oder aromatischen Dicarbonsäuren C oder deren C₁-bis C₄-Alkylester, wobei A und B zusammen 30 bis 95 Gew% dieses Gemischs ausmachen und
   wobei auch Carbonsäuren oder deren C₁- bis C₄-Alkylester mit mehr als zwei Carboxylgruppen im Molekül oder Monocarbonsäuren oder deren C₁- bis C₄-Alkylester oder Hydroxymonocarbonsäuren oder deren C₁- bis C₄-Alkylester oder Mischungen hieraus sowie Wachse bei der Polykondensation mit anwesend sein können,
durchführt.

Die erfindungsgemäßen Polyesterharze eignen sich in hervorragender Weise als Bindemittel für elektrophotographische Toner.

Somit sind auch Gegenstand der vorliegenden Erfindung elektrophotographische Toner, welche als Bindemittel ein oder mehrere erfindungsgemäße Polyesterharze in den hierfür üblichen Mengen enthalten.

Elektrophotographische Toner werden aus den erfindungsgemäßen Polyesterharzen beispielsweise hergestellt, indem das Harz auf eine Teilchengröße von kleiner als 1 mm gemahlen, mit Ruß, Magnetpigment oder einem Farbmittel, Wachs, gegebenenfalls einem Co-Bindemittel wie einem Copolymerisat aus Styrol und einem Acrylsäure-Derivat oder aus Styrol und Butadien oder einem Polyesterharz, Aerosil und einem Ladungssteuerungsstoff vermischt wird, diese Mischung zu einer einheitlichen Masse verknetet, diese dann auf eine Teilchengröße von 5 bis 15 µm gemahlen und in einem Fluidmischer mit Aerosil beschichtet wird.

Fehlen der Toner-Zusammensetzung noch einige für den Gebrauch in den Kopiergeräten notwendige Hilfsstoffe oder liegen sie noch nicht in ihrer endgültigen physikalischen Form vor, spricht man auch von Pseudo-Tonern.

Die erfindungsgemäßen Polyesterharze sind Mischungen aus verschiedensten Species von Makromolekülen mit unterschiedlichen mittleren Molekulargewichten. Da man Tonerharze mit einer möglichst breiten Molekulargewichtsverteilung anstrebt, ist das Vorliegen solch einer Mischung für das vorteilhafte Verhalten der erfindungsgemaßen Polyesterharze mitverantwortlich. Rheologische Untersuchungen zeigen, daß sie ein strukturviskoses Verhalten aufweisen.

Die erfindungsgemäßen Polyesterharze sind unproblematisch und reproduzierbar herzustellen, insbesondere ist die Gefahr einer unkontrollierbaren Vernetzung im Reaktionskessel weitgehend ausgeschlossen. Sie zeigen gute Dispergiereigenschaften für Ruß, Farbmittel, Ferrite oder andere feinteilige magnetische Materialien, Aerosil, Ladungsstabilisatoren und Wachse. Sie sind auf einer Gegenstrahlmühle gut mahlbar, hierbei ist ihr Durchsatz höher als bei vergleichbaren Harzen des Standes der Technik und ihr Feinstaubanteil sehr gering.

Die erfindungsgemäßen Polyesterharze zeichnen sich durch eine deutlich geringere elektrostatische Aufladbarkeit, verglichen mit den Mitteln des Standes der Technik, z.B. den Harzen aus (1), aus. Diese Eigenschaft erleichtert die Ladungssteuerung der mit den erfindungsgemäßen Polyesterharzen herstellbaren Toner erheblich.

Toner aus den erfindungsgemäßen Polyesterharzen sind lagerstabil und feuchtigkeitsunempfindlich und zeigen gute cold und hot offset-Eigenschaften bei gleichzeitig hoher Fixiergeschwindigkeit. Kopien, welche mit einem Toner aus diesem Harz hergestellt werden, zeigen gleichmäßige Schwärze in der Vollfläche, haben keinen Hintergrund an unbedruckten Stellen und sind migrationsecht. Migration in diesem Zusammenhang bedeutet das Ablösen von Tonerpartikeln von der Kopie durch Folien, z.B. Klarsichthüllen.

### Beispiele

Sowie nichts anderes angegeben ist, beziehen sich die Prozentangaben und Teile jeweils auf das Gewicht.

### Herstellung von Präpolymeren A

### Beispiele 1 bis 7 (Suspensionspolymerisation)

300,0 g Monomerenmischung (s. Tab. 1), 0,6 g Polyvinylpyrrolidon, 12,0 g Benzoylperoxid (75 %ig in H₂O) und 600 ml Wasser wurden bei 80 bis 90°C gerührt. Man erhielt die Suspensionspolymerisate 1 bis 7 (s. Tab. 1).

**Tabelle 1**

| OH-funktionalisierte Styrol-Acrylester-Copolymerisate durch Suspensionspolymerisation (S = Styrol, BA = n-Butylacrylat, BDA = 1,4-Butandiolmonoacrylat, HEA = 2-Hydroxyethylacrylat) | | | | | |
|---|---|---|---|---|---|
| Beispiel Nr. | S [%] | BA [%] | BDA [%] | OH-Zahl [mg KOH/g] | Glastemp. TG [°C] |
| 1 | 85,0 | 0 | 15,0 | 58,45 | 81 |
| 2 | 79,6 | 19,9 | 0,5 | 1,95 | 65 |
| 3 | 78,8 | 19,7 | 1,5 | 5,84 | 62 |
| 4 | 78,4 | 19,6 | 2,0 | 7,80 | 64 |
| 5 | 69,0 | 29,0 | 2,0 | 7,80 | 49 |
| 6 | 65,5 | 32,5 | 2,0 | 7,80 | 44 |
| 7 | 78,7 | 19,7 | 1,6 | 7,80 | 65 |

Die OH-Zahlen wurden berechnet.

### Beispiele 8 bis 18 (Suspensionspolymerisation)

1300 g Monomerenmischung (s. Tab. 2), 0,75 g Polyvinylpyrrolidon, 5,0 g Benzoylperoxid (75%ig in H₂O) und 1000 ml Wasser wurden bei 80 bis 90°C gerührt. Man erhielt die Suspensionspolymerisate 8 bis 18 (s. Tab. 2).

**Tabelle 2**

| OH-funktionalisierte, z.T. vernetzte Styrol-Methacrylester-Copolymerisate durch Suspensionspolymerisation (S = Styrol, BMA = n-Butylmethacrylat, HEA = 2-Hydroxyethylacrylat, DVB = Divinylbenzol) | | | | | | |
|---|---|---|---|---|---|---|
| Bsp. Nr. | S [%] | BMA [%] | HEA [%] | DVB [%] | OH-Zahl [mg KOH/g] | Glastemp. TG [°C] |
| 8 | 79,0 | 19,0 | 2,0 | - | 9,7 | 80 |
| 9 | 78,0 | 18,0 | 4,0 | - | 19,3 | 80 |
| 10 | 77,0 | 17,0 | 6,0 | - | 29,0 | 78 |
| 11 | 76,0 | 16,0 | 8,0 | - | 38,7 | 75 |
| 12 | 75,0 | 15,0 | 10,0 | - | 48,4 | 80 |
| 13 | 76,8 | 17,0 | 6,0 | 0,20 | 29 | 80 |
| 14 | 76,9 | 17,0 | 6,0 | 0,10 | 29 | 80 |
| 15 | 76,94 | 17,0 | 6,0 | 0,06 | 29 | 82 |
| 16 | 76,95 | 17,0 | 6,0 | 0,05 | 29 | 82 |
| 17 | 76,97 | 17,0 | 6,0 | 0,03 | 29 | 79 |
| 18 | 76,99 | 17,0 | 6,0 | 0,01 | 29 | 80 |

Die OH-Zahlen wurden berechnet; gemessene OH-Zahlen für die Beispiele 8/9/12/16: 3/6/14/8.

### Beispiele 19 bis 22 (Lösungspolymerisation)

Zu 120 g Monomerenmischung (s. Tab. 3), 4,8 g Benzoylperoxid (75 %ig in H₂O) und 12 g Toluol tropfte man unter Rühren bei 90°C innerhalb von 2 h eine Lösung von 480 g der Monomerenmischung, 19,2 g Benzoylperoxid (75 %ig in H₂O) und 48 g Toluol, rührte 1 h bei 90 bis 100°C und tropfte unter Rühren eine Lösung von 6,0 g Benzoylperoxid (75 %ig in H₂O) in 140 g Toluol innerhalb von 1 h zu. Nach 5 h bei 100°C erhielt man eine ca. 65 %ige Lösung des Polymers in Toluol.

**Tabelle 3**

| OH-funktionalisierte Styrol-Acrylester-Copolymerisate durch Lösungspolymerisation (S = Styrol, BA = n-Butylacrylat, HEA = 2-Hydroxyethylacrylat) | | | | | |
|---|---|---|---|---|---|
| Beispiel Nr. | S [%] | BA [%] | HEA [%] | OH-Zahl [mg KOH/g] | Glastemp. TG [°C] |
| 19 | 79,6 | 20,0 | 0,4 | 1,91 | 70 |
| 20 | 79,3 | 19,9 | 0,8 | 3,87 | 70 |
| 21 | 79,0 | 19,8 | 1,2 | 5,78 | 70 |
| 22 | 78,7 | 19,7 | 1,6 | 7,80 | 70 |

Die OH-Zahlen wurden berechnet.

### Beispiel 23 (Lösungspolymerisation unter Verwendung eines Vernetzers)

400 g Toluol wurden vorgelegt und auf Siedetemperatur erhitzt. Hierzu tropfte man während drei Stunden eine Mischung aus 1659,0 g (78,95 %) Styrol, 399,0 g (19,0 %) n-Butylmethacrylat, 42,0 g (2,0 %) Butandiolmonoacrylat und 1,1 g (0,05 %) Divinylbenzol in 200 g Toluol sowie gleichzeitig eine Lösung von 25,2 g tert.-Butylperbenzoat in 240 g Toluol, so daß die Temperatur 120 °C nicht überstieg. Nach einer Stunde Nachreaktionszeit bei Siedetemperatur wurden 5,3 g tert.-Butylperbenzoat in 60 g Toluol innerhalb einer Stunde zugetropft. Man ließ noch drei Stunden nachreagieren und anschließend auf Raumtemperatur abkühlen. Das erhaltene Lösungspolymerisat hatte eine berechnete OH-Zahl von 8 und eine Glastemperatur TG von 81 °C.

### Beispiele 24 bis 28 (Lösungspolymerisation unter Verwendung eines Reglers)

Zu 60 g Monomerenmischung (s. Tab. 4), 2,4 g Benzoylperoxid (75 %ig in H₂O) und 12 g Toluol tropfte man unter Rühren bei 90°C innerhalb von 2 h eine Lösung von 240 g der Monomerenmischung, 9,6 g Benzoylperoxid (75 %ig in H₂O) und 48 g Toluol, rührte 1 h bei 90 bis 100°C und tropfte unter Rühren eine Lösung von 3,0 g Benzoylperoxid (75 %ig in H₂O) in 70 ml Toluol innerhalb von 1 h zu. Nach 5 h bei 100°C erhielt an eine ca. 65 %ige Lösung des Polymers in Toluol.

**Tabelle 4**

| OH-funktionalisierte Styrol-Acrylester-Copolymerisate durch geregelte Lösungspolymerisation (S = Styrol, BA = n-Butylacrylat, ME = 2-Mercaptoethanol) | | | | |
|---|---|---|---|---|
| Beispiel Nr. | S [%] | BA [%] | ME [%] | OH-Zahl [mg KOH/g] |
| 24 | 70 | 30 | 0,3 | 2,14 |
| 25 | 70 | 30 | 0,6 | 4,28 |
| 26 | 70 | 30 | 1,2 | 8,51 |
| 27 | 70 | 30 | 2,0 | 14,08 |
| 28 | 65 | 35 | 2,0 | 14,08 |

Die OH-Zahlen wurden berechnet.

### Beispiele 29 bis 32 (Blockpolymerisation)

Die Beispiele 29 bis 32 wurden analog zu den Beispielen 19 bis 22 durch Fortlassen des Lösungsmittels durchgeführt.

Zu 120 g Monomerenmischung (s. Tab. 3) tropfte man unter Rühren bei 120°C innerhalb von 5 h gleichzeitig 480 g der jeweiligen Monomerenmischung und 24,0 g tert.-Butylperoctanoat, rührte 1 h bei 90 bis 100° und tropfte unter Rühren 6,0 g tert.-Butylperoctanoat innerhalb von 1 h zu. Nach 5 h bei 100° erhielt man eine leicht getrübte Schmelze des Polymers.

### Herstellung der Polyesterharze

### Beispiele 33 bis 39

207,0 g 1,6-Hexandiol, 290,7 g Terephthalsäure und 2,24 g Dibutylzinnoxid wurden unter Rühren auf 250°C erhitzt; es wurde solange Wasser abdestilliert, bis eine Säurezahl von ca. 90 mg KOH/g erreicht war. Dann gab man 1050,9 g eines Suspensionspolymerisats aus den Beispielen 1 bis 7 zu und destillierte unter Rühren bei 260°C solange Wasser ab, bis die Viskosität der Reaktionsmischung stark anstieg und möglichst eine Säurezahl von kleiner als 25 mg KOH/g erreicht war. - Tabelle 5 zeigt die Ergebnisse der Versuche.

**Tabelle 5**

| Bsp. Nr. | Präpolymer A aus Bsp. Nr. | Säurezahl SZ [mg KOH/g] | Glastemp. TG [°C] | Erweischungspunkt EP [°C] | Vernetzungszeit a) [h] |
|---|---|---|---|---|---|
| 33 | 1 | 108 | - | - | keine Vernetzung nach 3 h |
| 34 | 2 | 25 | 65 | 130 | keine Vernetzung nach 3 h |
| 35 | 3 | 25 | 61 | 133 | keine Vernetzung nach 3 h |
| 36 | 4 | 24 | 65 | 140 | keine Vernetzung nach 3 h |
| 37 | 5 | 35 | 50 | - | 1,0 |
| 38 | 6 | - | - | - | 0,5 |
| 39 | 7 | 24 | 61 | 137 | keine Vernetzung nach 3 h b) |

Die Säurezahlen wurden durch Titration bestimmt.
a) Zeit zwischen Zugabe von A und Vernetzung bzw. drastischem Viskositätsanstieg
b) Bei SZ = 103 mg KOH/g wurden 18,2 g Octadecanol zugegeben.

### Beispiele 40 bis 52

Ein zweifach symmetrisch ethoxyliertes Bisphenol-A, Terephthalsäuredimethylester, Dibutylzinnoxid (0,15 %, bezogen auf die Gesamtmenge) und ein hydroxyfunktionalisiertes Styrolmethacrylat gemäß den Beispielen 8 bis 18 wurden in Gegenwart von 100 g Toluol aufgeheizt und nach beginnender Schmelze wurde der Rührer mit 40 Upm eingeschaltet. Anschließend wurde auf 200°C (Innentemperatur) erhitzt und solange Methanol abdestilliert, bis die Viskosität der Reaktionsmischung stark anstieg. Der zeitliche Verlauf der Viskosität wurde über das Drehmoment des Rührers verfolgt. Die Kurve flachte mit zunehmender Reaktion immer weiter ab und hatte schließlich keine Steigung mehr, wodurch der Endpunkt der Reaktion bestimmt werden konnte. Nach Abdestillieren des Toluols wurde das Produkt in eine Zinnkanne ausgetragen und anschließend mechanisch zerkleinert. Die faustgroßen Brocken wurden in einer Schneidemühle auf Korngrößen von ein bis zwei Millimeter gemahlen. - Tabelle 6 zeigt die Ergebnisse der Versuche.

**Tabelle 6**

| Bsp. Nr. | Bis-A [g] | TDM [g] | Präpolymer A aus Bsp. Nr. [g] | | Reaktionszeit [h] | Glastemp. TG [°C] | Erweichungspunkt EP [°C] |
|---|---|---|---|---|---|---|---|
| 40 | 347,6 | 174,8 | 8 | 1042,1 | 15,5 | 61 | 116 |
| 41 | 293,6 | 184,5 | 9 | 1041,4 | 13,0 | 66 | 120 |
| 42 | 237,3 | 203,9 | 10 | 1041,4 | 4,25 | 56 | 126 |
| 43 | 206,4 | 194,2 | 11 | 1041,4 | 8,25 | 59 | 127 |
| 44 | 127,7 | 174,8 | 12 | 1041,4 | 9,0 | 55 | 119 |
| 45 | 297,0 | 271,8 | 13 | 1041,4 | 1,5 | 50 | 128 |
| 46 | 233,8 | 194,2 | 14 | 1041,4 | 2,0 | 53 | 129 |
| 47 | 233,8 | 194,2 | 15 | 642,5 | 1,75 | 54 | 126 |
| 48 | 290,9 | 194,2 | 16 | 318,0 | 4,75 | 63 | 120 |
| 49 | 285,2 | 194,2 | 16 | 390,3 | 6,5 | 58 | 109 |
| 50 | 276,3 | 194,2 | 16 | 503,0 | 5,5 | 63 | 134 |
| 51 | 233,8 | 194,2 | 17 | 1041,4 | 3,25 | 55 | 127 |
| 52 | 288,6 | 194,2 | 18 | 1041,4 | 5,75 | 57 | 127 |
| (Bis-A = zweifach symmetrisch ethoxyliertes Bisphenol-A, TDM = Terephthalsäuredimethylester) | | | | | | | |

### Beispiele 53 bis 56

207,0 g 1,6-Hexandiol, 290,7 g Terephthalsäure, 2,24 g Dibutylzinnoxid und 972,1 g eines Lösungspolymerisats aus den Beispielen 19 bis 22 (in Form einer ca. 65 %igen Lösung in Toluol) wurden unter Rühren erwärmt, Toluol wurde abdestilliert, anschließend wurde auf 260°C erhitzt und solange Wasser abdestilliert, bis die Viskosität der Reaktionsmischung stark anstieg und möglichst eine Säurezahl von kleiner als 45 mg KOH/g erreicht war.
- Tab. 7 zeigt die Ergebnisse der Versuche.

**Tabelle 7**

| Bsp. Nr. | Präpolymer A aus Bsp. Nr. | Säurezahl SZ [mg KOH/g] | Glastemp. TG [°C] | Erweichungspunkt EP [°C] | Vernetzungszeit a) [h] |
|---|---|---|---|---|---|
| 53 | 19 | 32 | 53 | 123 | keine Vernetzung nach 3 h |
| 54 | 20 | 38 | 51 | 126 | keine Vernetzung nach 3 h |
| 55 | 21 | 41 | 50 | 157 | keine Vernetzung nach 3 h |
| 56 | 22 | 45 | 52 | >200 | keine Vernetzung nach 3 h |

Die Säurezahlen wurden durch Titration bestimmt.

### a) Zeit zwischen Zugabe von A und Vernetzung bzw. drastischem Viskositätsanstieg

### Beispiele 57 bis 60

207,0 g 1,6-Hexandiol, 290,7 g Terephthalsäure, 2,24 g Dibutylzinnoxid und 248,9 g eines Lösungspolymerisats aus den Beispielen 19 bis 22 (in Form einer ca. 65 %igen Lösung in Toluol) wurden unter Rühren erwärmt, Toluol wurde abdestilliert, anschließend wurde auf 260°C erhitzt und solange Wasser abdestilliert, bis die Viskosität der Reaktionsmischung stark anstieg und möglichst eine Säurezahl von kleiner als 100 mg KOH/g erreicht war.
- Tab. 8 zeigt die Ergebnisse der Versuche.

**Tabelle 8**

| Bsp. Nr. | Präpolymer A aus Bsp. Nr. | Säurezahl SZ [mg KOH/g] | Glastemp. TG [°C] | Erweichungspunkt EP [°] | Vernetzungszeit a) [h] |
|---|---|---|---|---|---|
| 57 | 19 | 102 | 57 | 138 | 1,0 |
| 58 | 20 | 98 | 59 | 163 | 1,5 |
| 59 | 21 | 41 | 50 | 157 | 1,0 |
| 60 | 22 | 90 | 58 | 144 | keine Vernetzung nach 3 h |

Die Säurezahlen wurden durch Titration bestimmt.

### a) Zeit zwischen Zugabe von A und Vernetzung bzw. drastischem Viskositätsanstieg

### Beispiele 61 bis 64

554,3 g zu 90 % jeweils zweifach symmetrisch ethoxyliertes Bisphenol-A, 290,7 g Terephthalsäure, 3,91 g Dibutylzinnoxid und 1745,1 g eines Lösungspolymerisats aus den Beispielen 19 bis 22 (in Form einer ca. 65 %igen Lösung in Toluol) wurden unter Rühren erwärmt, Toluol wurde abdestilliert, anschließend wurde auf 260°C erhitzt und solange Wasser abdestilliert, bis die Viskosität der Reaktionsmischung stark anstieg und eine Säurezahl von kleiner als 25 mg KOH/g erreicht war.
- Tab. 9 zeigt die Ergebnisse dieser Versuche.

### Beispiel 65

182,5 g zu 90 % jeweils zweifach symmetrisch ethoxyliertes Bisphenol A, 397,3 g zu 95 % jeweils zweifach symmetrisch propoxyliertes Bisphenol A, 290,7 g Terephthalsäure, 3,91 g Dibutylzinnoxid und 1745,1 g des Lösungspolymerisats aus Beispiel 19 (in Form einer ca. 65 %igen Lösung in Toluol) wurden unter Rühren erwärmt, Toluol wurde abdestilliert, anschließend wurde auf 260°C erhitzt und solange Wasser abdestilliert, bis die Viskosität der Reaktionsmischung stark anstieg und eine Säurezahl von kleiner al 25 mg KOH/g erreicht war.
- Tab. 9 zeigt das Ergebnis dieses Versuchs.

**Tabelle 9**

| Bsp. Nr. | Präpolymer A aus Bsp. Nr. | Säurezahl SZ [mg KOH/g] | Glastemp. TG [°C] | Erweichungspunkt EP [°C] | Vernetzungszeit a) [h] |
|---|---|---|---|---|---|
| 61 | 19 | 8 | 65 | 126 | keine Vernetzung nach 3 h |
| 62 | 20 | 5 | 63 | >200 | 1,75 |
| 63 | 21 | 6 | 63 | >200 | 1,25 |
| 64 | 22 | 13 | 69 | 131 | 1,0 |
| 65 | 19 | 7 | 68 | 136 | keine Vernetzung nach 3 h |

Die Säurezahlen wurden durch Titration bestimmt.

### a) Zeit zwischen Zugabe von A und Vernetzung bzw. drastischem Viskositätsanstieg

### Beispiele 66 bis 69

554,3 g zu 90 % jeweils zweifach symmetrisch ethoxyliertes Bisphenol-A, 290,7 g Terephthalsäure, 3,91 g Dibutylzinnoxid und 422,5 g eines Lösungspolymerisats aus den Beispielen 10 bis 22 (in Form einer ca. 65 %igen Lösung in Toluol) wurden unter Rühren erwärmt, Toluol wurde abdestilliert, anschließend wurde auf 260°C erhitzt und solange Wasser abdestilliert, bis die Viskosität der Reaktionsmischung stark anstieg und eine Säurezahl von kleiner als 25 mg KOH/g erreicht war.
- Tab. 10 zeigt die Ergebnisse der Versuche.

**Tabelle 10**

| Bsp. Nr. | Präpolymer A aus Bsp. Nr. | Säurezahl SZ [mg KOH/g] | Glastemp. TG [°C] | Erweichungspunkt EP [°C] | Vernetzungszeit a) [h] |
|---|---|---|---|---|---|
| 66 | 19 | 10 | 78 | - | keine Vernetzung nach 1,5 h |
| 67 | 20 | 13 | 69 | 114 | keine Vernetzung nach 1,5 h |
| 68 | 21 | 14 | 69 | 131 | keine Vernetzung nach 1,0 h |
| 69 | 22 | 18 | 68 | 136 | keine Vernetzung nach 1,0 h |

Die Säurezahlen wurden durch Titration bestimmt.

### a) Zeit zwischen Zugabe von A und Vernetzung bzw. drastischem Viskositätsanstieg

### Beispiel 70

Analog zu den Beispielen 40 bis 52 wurde aus 305,1 g eines zweifach symmetrisch ethoxylierten Bisphenol-A, 194,2 g Terephthalsäuredimethylester, 1,5 g Titanbutoxylat und 714 g des Präpolymeren A aus Beispiel 23 (70%ige Lösung in Toluol) ein Polyester mit einer Glastemperatur TG von 62°C und einem Erweichungspunkt EP von 135°C hergestellt.

### Beispiele 71 bis 75

554,3 g zu 90 % jeweils zweifach symmetrisch ethoxyliertes Bisphenol-A, 290,7 g Terephthalsäure, 3,91 g Dibutylzinnoxid und 1745,1 g eines Lösungspolymerisats aus den Beispielen 24 bis 28 (in Form einer ca. 65 %igen Lösung in Toluol) wurden unter Rühren erwärmt, Toluol wurde abdestilliert, anschließend wurde auf 260°C erhitzt und solange Wasser abdestilliert, bis die Viskosität der Reaktionsmischung stark anstieg und eine Säurezahl von kleiner als 25 mg KOH/g erreicht war.
- Die erhaltenen Harze wiesen im wesentlichen die gleichen Charakteristika wie die Produkte der Beispiele 61 bis 65 auf.

### Vergleichsbeispiel A

Gemäß (1) wurde ein Polyesterharz aus einem jeweils zweifach symmetrisch ethoxylierten Bisphenol A, einem jeweils zweifach symmetrisch propoxylierten Bisphenol A, Terephthalsäure und Trimellithsäureanhydrid als Hauptkomponenten hergestellt. Das so hergestellte Harz hatte eine Säurezahl von 19 mg KOH/g, eine Glastemp. TG von 68°C und einen
Erweichungspunkt von 148°C.

### Herstellung von Pseudo-Tonern

### Beispiele 76 bis 78 und Vergleichsbeispiel B

Jeweils 100 g eines Polyesterharzes, hergestellt gemäß den Beispielen 61, 65 und 66, wurden in einem Jahnke & Kunkel Laborkneter bei zunächst 150°C geknetet. Man gab 5 g Ruß (Mogul@L der Firma Cabot) zu und knetete anschließend während 3 h, wobei die Temperatur sukzessive auf 90°C abgesenkt wurde. Alle 0,5 h wurden dem Kneter kleine Muster entnommen und ihre Feinverteilung wurde lichtmikroskopisch bei ca. 700-fächer Vergrößerung visuell beurteilt. Die Teilchengrößenverteilung im Harz war nach 3 h sehr gut (< 1 µm) bis akzeptabel.

Die Pseudo-Toner wurden jeweils durch Mahlung in einer Gegenstrahlmühle der Firma Alpine, Typ AFG (6 bar Stickstoff, Geschwindigkeit des Sichterrads 8000 U/min) auf eine Teilchengröße von 5 bis 15 µm hergestellt.

Zum Vergleich wurde ein Pseudo-Toner mit dem Harz aus Vergleichsbeispiel A analog durch Kneten und Mahlen hergestellt. Dieser Pseudo-Toner diente als Vergleichsbeispiel B.

Die Daten aller 4 Pseudo-Toner sind in Tabelle 11 zusammengestellt.

Zur Überprüfung der Einarbeitbarkeit von Farbpigmenten wurden 40 g Pigment Red 81:1 (Fanal Rosa S 4830) als Pigmentpulver mit 60 g der genannten Polyesterharze sowie des Vergleichsharzes A geknetet und die Feinverteilung wurde untersucht. Auch diese Daten sind in Tabelle 11 angegeben. Prüfungen der elektrostatischen Aufladbarkeit werden an diesen Pseudo-Tonern nicht durchgeführt.

### Anwendungstechnische Eigenschaften der Pseudo-Toner der Beispiele 76 bis 78 und des Vergleichsbeispiels B

Ein ca. 40 cm langer Streifen Kopierpapier wurde jeweils mit dem Tonerpulver der Versuche 50 bis 52 der Länge nach bestäubt, mit einem unbehandelten Papierstreifen bedeckt und ca. 5 sec. auf einer Koflerbank (50 bis 270°C) mit 1,5 kg gleichmäßig belastet. Zum Vergleich wurde der oben beschriebene Pseudo-Toner B entsprechend geprüft. Die Temperatur der Fixierung auf dem Papier wurde durch Reiben mit dem Finger, Tesafilm® und Radiergummi bestimmt. Es wurde die Temperatur des Beginns der Fixierung sowie die Temperatur der vollständigen Fixierung bestimmt. Die Pseudo-Toner der Beispiele 76 bis 78 zeigten ein ähnlich gutes Fixierverhalten wie der Pseudo-Toner des Vergleichsversuchs B. Die anwendungstechnischen Eigenschaften der Pseudo-Toner sind in Tabelle 11 zusammengestellt. Die elektrostatische Aufladbarkeit der Pseudo-Toner der Beispiele 76 bis 78 ist deutlich geringer als die des Vergleichstoners B.

**Tabelle 11**

| Bsp. Nr. | Harz aus Bsp. Nr. | Feinverteilung mit Ruß | Pigment Red 81:1 | Mahlbarkeit | elektrostat. Aufladbarkeit (mit Ruß) q/m [µC/g] | Fixierbereich [°C] |
|---|---|---|---|---|---|---|
| erfindungsgemäß: | | | | | | |
| 76 | 61 | gut | - | gut | 14,3 | 120-160 |
| 77 | 65 | sehr gut | sehr gut | gut | 11,8 | 110-150 |
| 78 | 66 | mäßig | - | mäßig | 10,5 | 125-160 |

| zum Vergleich: | | | | | | |
|---|---|---|---|---|---|---|
| B | A | gut | mäßig | gut | 17,5 | 130-190 |

### Beispiel 79 und Vergleichsbeispiel C

133 g eines Polyesterharzes hergestellt gemäß Beispiel 70 wurden in einem Jahnke & Kunkel-Laborkneter bei 100°C geknetet. Man gab 7 g Ruß (Mogul L der Fa. Cabot) zu und knetete anschließend während 3 h, wobei die Temperatur sukzessive auf 70°C abgesenkt wurde. Alle 0,5 h wurden dem Kneter kleine Muster entnommen und ihre Feinverteilung wurde lichtmikroskopisch bei ca. 700facher Vergrößerung visuell beurteilt. Die Teilchengrößenverteilung im Harz war nach 3 h sehr gut.

Der Pseudo-Toner wurde durch Mahlung in einer Jahnke & Kunkel-Labormühle und anschließende Siebung durch ein 36-µ-Sieb auf eine Teilchengröße von < 36 hergestellt.

Zum Vergleich wurde ein Pseudo-Toner mit dem Harz aus Vergleichsbeispiel A analog durch Kneten und Mahlen hergestellt. Dieser diente als Vergleichsbeispiel C.

Analog zu den Beispielen 76 bis 78 wurde bei Beispiel 79 auch das Pigment Red 81:1 eingearbeitet. An diesem Pseudo-Toner wurde ebenfalls keine Prüfung der elektrostatischen Aufladbarkeit durchgeführt.

Die Daten dieser Pseudo-Toner sind in Tabelle 12 zusammengestellt.

### Anwendungstechniche Eigenschaften der Pseudo-Toner des Beispiels 79 und des Vergleichsbeispiels C

Analog zu der bei den Beispielen 76 bis 78 beschriebenen Fixierprüfung an den Pseudo-Tonern wurden auch die Pseudo-Toner des Beispiels 79 und des Vergleichsbeispiels C geprüft. Der Pseudo-Toner des Beispiels 79 zeigte eine deutlich geringere elektrostatische Aufladung als Vergleichsbeispiel C.

**Tabelle 12**

| Bsp. Nr. | Harz aus Bsp. Nr. | Feinverteinlung mit Ruß | Pigment Red 81:1 | Mahlbarkeit | elektrostat. Aufladbarkeit (mit Ruß) q/m [µC/g] | Fixierbereich [°C] |
|---|---|---|---|---|---|---|
| erfindungsgemäß: | | | | | | |
| 79 | 70 | sehr gut | sehr gut | sehr | + 0,2 (a) | 105-135 |
| | | | | gut | - 2,7 (b) | |

| Zum Vergleich: | | | | | | |
|---|---|---|---|---|---|---|
| C | A | gut | - | gut | - 2,2 (a) | 120-155 |
| | | | | | - 8,7 (b) | |

| | | | | | | |
|---|---|---|---|---|---|---|
| (a) Messung mit einem sphärischen unbeschichteten Stahlcarrier | | | | | | |
| (b) Messung mit einem unregelmäßigen beschichteten Stahlcarrier | | | | | | |

Die Ergebnisse der elektrostatischen Aufladbarkeit zeigen, daß die erfindungsgemäßen Harze deutlich weniger negativ aufladen. Die besseren Feinverteilungen mit Ruß und insbesondere Pigment Red 81:1 bei den erfindungsgemäßen Harzen im Gegensatz zum Vergleichsharz fallen ebenfalls auf. Auch die niedrigere Fixiertemperatur der erfindungsgemäßen Pseudo-Toner im Gegensatz zum Vergleichs-Pseudo-Toner deutet auf die Überlegenheit der erfindungsgemäßen Mittel hin.

## Patentansprüche

1. Polyesterharze auf Basis von hydroxylgruppenhaltigen Präpolymeren aus olefinisch ungesättigten Monomeren, erhältlich durch
(1) Polymerisation eines Gemisches aus
(a) 60 bis 90 Gew.-% Styrol oder eines Styrol-Derivates der allgemeinen Formel I 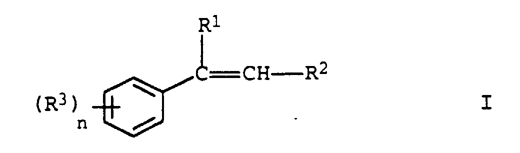 in der R¹, R² und R³ für Wasserstoff, Methyl oder Ethyl stehen und n 1 oder 2 bedeutet, oder eines C₂- bis C₁₀-Olefins mit einer oder zwei konjugierten Doppelbindungen oder einer Mischung hieraus,
(b) 0 bis 40 Gew.-% eines C₁- bis C₁₂-Alkylesters der Acryl- oder Methacrylsäure, Acryl- oder Methacrylnitril, Acryl- oder Methacrylamid, welches am Amidstickstoff durch ein oder zwei C₁- bis C₄-Alkylgruppen substituiert sein kann, Maleinsäureanhydrid oder Maleinsäureimid, welches am Imidstickstoff durch eine C₁- bis C₄-Alkylgruppe substituiert sein kann, oder einer Mischung hieraus,
(c) 0 bis 20 Gew.-% eines oder mehrerer hydroxylgruppenhaltiger Acryl- oder Methacrylsäure-Derivate und
(d) 0 bis 2 Gew.-% eines oder mehrerer mehrfach olefinisch ungesättigter Monomeren,
zum Präpolymeren A, wobei beim Fehlen der Monomerkomponente (c) die Hydroxylgruppen in A durch Verwendung von hydroxylgruppenhaltigen Reglern eingebaut werden, und anschließend
(2) Polykondensation eines Gemisches aus
A) 5 bis 95 Gew.-% des Präpolymeren A,
B) 0 bis 95 Gew.-% eines weiteren niedermolekularen oder höhermolekularen Polyols, eines Polyesters oder eines Polyamids oder einer Mischung hieraus und
C) 5 bis 70 Gew.-% einer oder mehrerer aliphatischer oder aromatischer Dicarbonsäuren C oder deren C₁- bis C₄-Alkylester,
wobei A und B zusammen 30 bis 95 Gew.-% dieses Gemisches ausmachen und wobei auch Carbonsäuren oder deren C₁- bis C₄-Alkylester mit mehr als zwei Carboxylgruppen im Molekül oder Monocarbonsäuren oder deren C₁- bis C₄-Alkylester oder Hydroxymonocarbonsäuren oder deren C₁- bis C₄-Alkylester oder Mischungen hieraus sowie Wachse bei der Polykondensation mit anwesend sein können.

2. Polyesterharze nach Anspruch 1, bei deren Herstellung als Monomer (a) für die Polymerisation (1) Styrol, α-Methylstyrol, Ethylen, Propylen, Butadien oder eine Mischung hieraus eingesetzt worden ist.

3. Polyesterharze nach Anspruch 1 oder 2, bei deren Herstellung als Monomer (b) für die Polymerisation (1) ein C₁- bis C₄-Alkylester der Acryl- oder Methacrylsäure, Acryl- oder Methacrylnitril, Acryl- oder Methacrylamid oder eine Mischung hieraus eingesetzt worden ist.

4. Polyesterharze nach den Ansprüchen 1 bis 3, bei deren Herstellung als Monomer (c) für die Polymerisation (1) ein Hydroxy-C₂- bis C₄-alkylacrylat oder -methacrylat oder ein N-(Hydroxy-C₂- bis C₄-alkyl)acrylamid oder -methacrylamid oder eine Mischung hieraus oder beim Fehlen der Monomerkomponente (c) ein hydroxylgruppenhaltiges Mercaptan als Regler eingesetzt worden ist.

5. Polyesterharze nach den Ansprüchen 1 bis 4, bei deren Herstellung als Monomer (d) für die Polymerisation (1) Divinylbenzol eingesetzt worden ist.

6. Polyesterharze nach den Ansprüchen 1 bis 5, bei deren Herstellung als Komponente B für die Polykondensation (2) ein C₂- bis C₆-Alkandiol, ethoxyliertes oder propoxyliertes Bisphenol-A oder eine Mischung hieraus eingesetzt worden ist.

7. Polyesterharze nach den Ansprüchen 1 bis 6, bei deren Herstellung als Komponente C für die Polykondensation (2) Phthalsäure, Isophthalsäure, Terephthalsäure oder deren C₁- bis C₄-Dialkylester oder eine Mischung hieraus eingesetzt worden ist.

8. Verfahren zur Herstellung von Polyesterharzen auf Basis von hydroxylgruppenhaltigen Präpolymeren aus olefinisch ungesättigten Monomeren, dadurch gekennzeichnet, daß man
(1) eine Polymerisation eines Gemisches aus
(a) 60 bis 90 Gew.-% Styrol oder eines Styrol-Derivates der allgemeinen Formel I 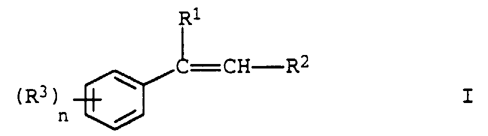 in der R¹, R² und R³ für Wasserstoff, Methyl oder Ethyl stehen und n 1 oder 2 bedeutet, oder eines C₂- bis C₁₀-Olefins mit einer oder zwei konjugierten Doppelbindungen oder einer Mischung hieraus,
(b) 0 bis 40 Gew.-% eines C₁- bis C₁₂-Alkylesters der Acryl- oder Methacrylsäure, Acryl- oder Methacrylnitril, Acryl- oder Methacrylamid, welches am Amidstickstoff durch ein oder zwei C₁- bis C₄-Alkylgruppen substituiert sein kann, Maleinsäureanhydrid oder Maleinsäureimid, welches am Imidstickstoff durch eine C₁- bis C₄-Alkylgruppe substituiert sein kann, oder einer Mischung hieraus,
(c) 0 bis 20 Gew.-% eines oder mehrerer hydroxylgruppenhaltiger Acryl- oder Methacrylsäure-Derivate und
(d) 0 bis 2 Gew.-% eines oder mehrerer mehrfach olefinisch ungesättigten Monomeren,
zum Präpolymeren A, wobei beim Fehlen der Monomerkomponente (c) die Hydroxylgruppen in A durch Verwendung von hydroxylgruppenhaltigen Reglern eingebaut werden, und anschließend
(2) eine Polykondensation eines Gemisches aus
A) 5 bis 95 Gew.-% des Präpolymeren A,
B) 0 bis 95 Gew.-% eines weiteren niedermolekularen oder höhermolekularen Polyols, eines Polyesters oder eines Polyamids oder einer Mischung hieraus und
C) 5 bis 70 Gew.-% einer oder mehrerer aliphatischer oder aromatischer Dicarbonsäuren C oder deren C₁- bis C₄-Alkylester,
wobei A und B zusammen 30 bis 95 Gew.-% dieses Gemisches ausmachen und wobei auch Carbonsäuren oder deren C₁- bis C₄-Alkylester mit mehr als zwei Carboxylgruppen im Molekül oder Monocarbonsäuren oder deren C₁- bis C₄-Alkylester oder Hydroxymonocarbonsäuren oder deren C₁- bis C₄-Alkylester oder Mischungen hieraus sowie Wachse bei der Polykondensation mit anwesend sein können,
durchführt.

9. Verwendung von Polyesterharzen gemäß den Ansprüchen 1 bis 7 als Bindemittel für elektrophotographische Toner.

10. Elektrophotographische Toner, enthaltend als Bindemittel ein oder mehrere Polyesterharze gemäß den Ansprüchen 1 bis 7.

## Claims

1. A polyester resin based on hydroxyl-containing prepolymers of olefinically unsaturated monomers, obtainable by
(1) polymerization of a mixture of
(a) from 60 to 90% by weight of styrene or of a styrene derivative of the formula I 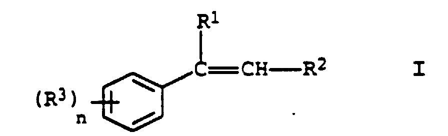 where R¹, R² and R³ are each hydrogen, methyl or ethyl and n is 1 or 2, or of a C₂-C₁₀-olefin having one or two conjugated double bonds, or of a mixture thereof,
(b) from 0 to 40% by weight of a C₁-C₁₂-alkyl ester of acrylic or methacrylic acid, acrylonitrile or methacrylonitrile, acrylamide or methacrylamide which may be substituted by one or two C₁-C₄-alkyl groups on the amide nitrogen, maleic anhydride or maleimide which may be substituted by C₁-C₄-alkyl on the imide nitrogen, or a mixture thereof,
(c) from 0 to 20% by weight of one or more hydroxyl-containing acrylic or methacrylic acid derivatives, and
(d) from 0 to 2% by weight of one or more polyolefinically unsaturated monomers,
to give the prepolymer A, the hydroxyl groups being incorporated in A by using hydroxyl-containing regulators if the monomer component (c) is absent, and subsequently
(2) polycondensation of a mixture of
A) from 5 to 95% by weight of the prepolymer A,
B) from 0 to 95% by weight of a further low molecular weight or relatively high molecular weight polyol, of a polyester or of a polyamide or a mixture thereof and
C) from 5 to 70% by weight of one or more aliphatic or aromatic dicarboxylic acids C or C₁-C₄-alkyl esters thereof,
where A and B together account for from 30 to 95% by weight of this mixture, and where carboxylic acids or C₁-C₄-alkyl esters thereof having more than two carboxyl groups in the molecule or monocarboxylic acids or C₁-C₄-alkyl esters thereof or hydroxymonocarboxylic acids or C₁-C₄-alkyl esters thereof, or a mixture of these, and waxes may also be present in the polycondensation.

2. A polyester resin as claimed in claim 1, in whose preparation styrene, α-methylstyrene, ethylene, propylene, butadiene or a mixture thereof has been used as monomer (a) for the polymerization (1).

3. A polyester resin as claimed in claim 1 or 2, in whose preparation a C₁-C₄-alkyl ester of acrylic or methacrylic acid, acrylonitrile or methacrylonitrile, acrylamide or methacrylamide or a mixture thereof has been used as monomer (b) for the polymerization (1).

4. A polyester resin as claimed in any of claims 1 to 3, in whose preparation a hydroxy-C₂-C₄-alkyl acrylate or methacrylate or an N-(hydroxy-C₂-C₄-alkyl)-acrylamide or -methacrylamide or a mixture thereof can be used as monomer (c) for the polymerization (1), or, when monomer component (c) is absent, a hydroxyl-containing mercaptan has been used as a regulator.

5. A polyester resin as claimed in any of claims 1 to 4, in whose preparation divinylbenzene has been used as monomer (d) for the polymerization (1).

6. A polyester resin as claimed in any of claims 1 to 5, in whose preparation a C₂-C₆-alkanediol, ethoxylated or propoxylated bisphenol A or a mixture thereof has been used as component B for the polycondensation (2).

7. A polyester resin as claimed in any of claims 1 to 6, in whose preparation phthalic acid, isophthalic acid, terephthalic acid or its C₁-C₄-dialkyl ester or a mixture thereof has been used as component C for the polycondensation (2) .

8. A process for the preparation of a polyester resin based on hydroxyl-containing prepolymers of olefinically unsaturated monomers, wherein
(1) a polymerization of a mixture of
(a) from 60 to 90% by weight of styrene or of a styrene derivative of the formula I 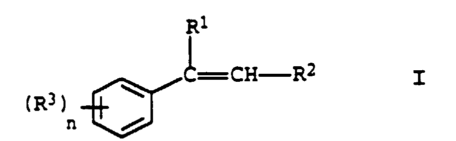 where R¹, R² and R³ are each hydrogen, methyl or ethyl and n is 1 or 2, or of a C₂-C₁₀-olefin having one or two conjugated double bonds, or of a mixture thereof,
(b) from 0 to 40% by weight of a C₁-C₁₂-alkyl ester of acrylic or methacrylic acid, acrylonitrile or methacrylonitrile, acrylamide or methacrylamide which may be substituted by one or two C₁-C₄-alkyl groups on the amide nitrogen, maleic anhydride or maleimide which may be substituted by C₁-C₄-alkyl on the imide nitrogen, or a mixture thereof,
(c) from 0 to 20% by weight of one or more hydroxyl-containing acrylic or methacrylic acid derivatives, and
(d) from 0 to 2% by weight of one or more polyolefinically unsaturated monomers,
to give the prepolymer A, the hydroxyl groups being incorporated in A by using hydroxyl-containing and subsequently
(2) polycondensation of a mixture of
A) from 5 to 95% by weight of the prepolymer A,
B) from 0 to 95% by weight of a further low molecular weight or relatively high molecular weight polyol, of a polyester or of a polyamide or a mixture thereof and
C) from 5 to 70% by weight of one or more aliphatic or aromatic dicarboxylic acids C or C₁-C₄-alkyl esters thereof,
where A and B together account for from 30 to 95% by weight of this mixture, and where carboxylic acids or C₁-C₄-alkyl esters thereof having more than two carboxyl groups in the molecule or monocarboxylic acids or C₁-C₄-alkyl esters thereof or hydroxymonocarboxylic acids or C₁-C₄-alkyl esters thereof, or a mixture of these, and waxes may also be present in the polycondensation,
are carried out.

9. Use of a polyester resin as claimed in any of claims 1 to 7 as a binder for electrophotographic toners.

10. An electrophotographic toner containing, as a binder, one or more polyester resins as claimed in any of claims 1 to 7.

## Revendications

1. Résines de polyesters à base de prépolymères contenant des radicaux hydroxyle formés de monomères à insaturation oléfinique, que l'on peut obtenir par
(1) la polymérisation d'un mélange constitué de
(a) 60 à 90% en poids de styrène ou d'un dérivé du styrène de la formule générale I 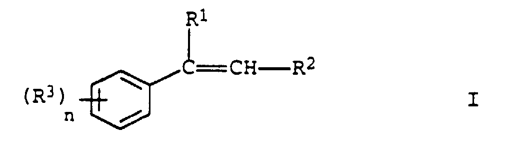 dans laquelle R¹, R² et R³ représentent chacun un atome d'hydrogène, le radical méthyle ou éthyle et n est égal à 1 ou à 2, ou d'une oléfine en C₂ à C₁₀ avec une ou deux doubles liaisons conjuguées, ou un mélange de ceux-ci,
(b) 0 à 40% en poids d'un ester alkylique en C₁ à C₁₂ de l'acide acrylique ou de l'acide méthacrylique, d'acrylonitrile ou de méthacrylonitrile, d'acrylamide ou de méthacrylamide, qui peut être substitué par un ou deux radicaux alkyle en C₁ à C₄ sur l'azote amidique, d'anhydride maléique ou de maléimide, qui peut être substitué par un radical alkyle en C₁ à C₄ sur l'atome d'azote imidique, ou d'un mélange de ceux-ci,
(c) 0 à 20% en poids d'un ou plusieurs dérivés de l'acide acrylique ou de l'acide méthacrylique contenant des radicaux hydroxyle et
(d) 0 à 2% en poids d'un ou plusieurs monomères à insaturation oléfinique,
en prépolymère A, où en cas d'absence du composant monomérique (c), les radicaux hydroxyle dans A sont incorporés par l'utilisateur de régulateurs contenant des radicaux hydroxyle et, ensuite,
(2) la polycondensation d'un mélange de
A) 5 à 95% en poids du prépolymère A,
B) 0 à 95% en poids d'un polyol supplémentaire de faible poids moléculaire ou de poids moléculaire élevé, d'un polyester, ou d'un polyamide, ou d'un mélange de ceux-ci et
C) 5 à 70% en poids d'un ou plusieurs acides dicarboxyliques aliphatiques ou aromatique C ou de leurs esters alkyliques en C₁ à C₄,
où A et B constituent ensemble 30 à 95% en poids de ce mélange et où des acides carboxyliques ou leurs esters alkyliques en C₁ à C₄ avec plus de deux radicaux carboxyle dans la molécule, ou des acides monocarboxyliques ou leurs esters alkyliques en C₁ à C₄, ou des acides hydroxymonocarboxyliques ou leurs esters alkyliques en C₁ à C₄, ou des mélanges de ceux-ci, comme aussi des cires, peuvent être conjointement présents au cours de la polycondensation.

2. Résines de polyesters suivant la revendication 1, au cours de la préparation desquelles, on a mis en oeuvre, à titre de monomère (a) pour la polymérisation (1), du styrène, de l'α-méthylstyrène, de l'éthylène, du propylène, du butadiène, ou un mélange de ceux-ci.

3. Résines de polyesters suivant la revendication 1 ou 2, au cours de la préparation desquelles on a mis en oeuvre, à titre de monomère (b) pour la polymérisation (1), un ester alkylique en C₁ à C₄ de l'acide acrylique ou de l'acide méthacrylique, de l'acrylonitrile ou du méthacrylonitrile, de l'acrylamide ou du méthacrylamide, ou un mélange de ceux-ci.

4. Résines de polyesters suivant les revendications 1 à 3, au cours de la préparation desquelles on a mis en oeuvre, à titre de monomère (c) pour la polymérisation (1), un acrylate d'hydroxyalkyle en C₂ à C₄ ou un méthacrylate d'hydroxyalkyle en C₂ à C₄, ou un N-(hydroxyalkyl en C₂ à C₄)acrylamide ou un N-(hydroxyalkyl en C₂ à C₄)-méthacrylamide, ou un mélange de ceux-ci, ou bien, en l'absence du composant monomérique (c), on a mis en oeuvre un mercaptan contenant des radicaux hydroxyle à titre de régulateur.

5. Résines de polyesters suivant les revendications 1 à 4, au cours de la préparation desquelles on a mis en oeuvre du divinylbenzène à titre de monomère (d) pour la polymérisation (1).

6. Résines de polyesters suivant les revendications 1 à 5, au cours de la préparation desquelles on a utilisé, à titre de composant B pour la polycondensation (2), un alcanediol en C₂ à C₆, du bisphénol A éthoxylé ou propoxylé, ou un mélange de ceux-ci.

7. Résines de polyesters suivant l'une quelconque des revendications 1 à 6, au cours de la préparation desquelles on a mis en oeuvre, à titre de composant C pour la polycondensation (2), de l'acide phtalique, de l'acide isophtalique, de l'acide téréphtalique, ou leurs esters dialkyliques en C₁ à C₄, ou un mélange de ceux-ci.

8. Procédé de préparation de résines de polyesters à base de prépolymères contenant des radicaux hydroxyle à partir de monomères à insaturation oléfinique, caractérisé en ce que l'on entreprend
(1) la polymérisation d'un mélange constitué de
(a) 60 à 90% en poids de styrène ou d'un dérivé du styrène de la formule générale I 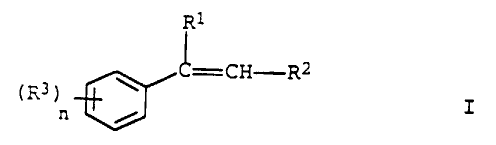 dans laquelle R¹, R² et R³ représentent chacun un atome d'hydrogène, le radical méthyle ou éthyle et n est égal à 1 ou à 2, ou d'une oléfine en C₂ à C₁₀ avec une ou deux doubles liaisons conjuguées, ou un mélange de ceux-ci,
(b) 0 à 40% en poids d'un ester alkylique en C₁ à C₁₂ de l'acide acrylique ou de l'acide méthacrylique, d'acrylonitrile ou de méthacrylonitrile, d'acrylamide ou de méthacrylamide, qui peut être substitué par un ou deux radicaux alkyle en C₁ à C₄ sur l'azote amidique, d'anhydride maléique ou de maléimide, qui peut être substitué par un radical alkyle en C₁ à C₄ sur l'atome d'azote imidique, ou d'un mélange de ceux-ci,
(c) 0 à 20% en poids d'un ou plusieurs dérivés de l'acide acrylique ou de l'acide méthacrylique contenant des radicaux hydroxyle et
(d) 0 à 2% en poids d'un ou plusieurs monomères à insaturation polyoléfinique,
en prépolymère A, où en cas d'absence du composant monomérique (c), les radicaux hydroxyle dans A sont incorporés par l'utilisateur de régulateurs contenant des radicaux hydroxyle et, ensuite,
(2) la polycondensation d'un mélange de
A) 5 à 95% en poids du prépolymère A,
B) 0 à 95% en poids d'un polyol supplémentaire de faible poids moléculaire ou de poids moléculaire élevé, d'un polyester, ou d'un polyamide, ou d'un mélange de ceux-ci et
C) 5 à 70% en poids d'un ou plusieurs acides dicarboxyliques aliphatiques ou aromatique C ou de leurs esters alkyliques en C₁ à C₄,
où A et B constituent ensemble 30 à 95% en poids de ce mélange et où des acides carboxyliques ou leurs esters alkyliques en C₁ à C₄ avec plus de deux radicaux carboxyle dans la molécule, ou des acides monocarboxyliques ou leurs esters alkyliques en C₁ à C₄, ou des acides hydroxymonocarboxyliques ou leurs esters alkyliques en C₁ à C₄, ou des mélanges de ceux-ci, comme aussi des cires, peuvent être conjointement présents au cours de la polycondensation.

9. Utilisation de résine de polyesters suivant les revendications 1 à 7, à titre de liants pour des encres électrophotographiques.

10. Encres électrophotographiques, qui contiennent, à titre de liant, une ou plusieurs résines de polyesters suivant les revendications 1 à 7.
